# EUROPEAN PATENT APPLICATION

(11) **EP 3 366 721 A1**
(43) Date of publication of application: **29.08.2018**
(21) Application number: 16857324.4
(22) Date of filing: 07.10.2016
(51) Int. Cl.: C08L 27/18, C08J 3/24, C08K 5/098, C08K 5/14, C08K 5/3477

(54) **METHOD FOR PRODUCING CROSSLINKED PRODUCT AND FLUOROELASTOMER COMPOSITION**

(30) Priority: 19.10.2015 JP 2015205451
(71) Applicant: Asahi Glass Company, Limited, Tokyo 100-8405 (JP)
(72) Inventor: YAMADA, Takeshi, Tokyo 100-8405 (JP); IRUYA, Ken, Tokyo 100-8405 (JP); NAGAI, Hiroki, Tokyo 100-8405 (JP)
(74) Representative: Müller-Boré & Partner Patentanwälte PartG mbB
(86) International application number: PCT/JP2016/080012
(87) International publication number: WO 2017/069009

(57) **Abstract**

To provide a method for producing a crosslinked product of a fluoroelastomer having no hydrogen atom bonded to a carbon atom, by which formation of white foreign matters is suppressed, and a fluoroelastomer composition suitable for the production method.

A method for producing a crosslinked product, which comprises crosslinking a fluoroelastomer composition containing a fluoroelastomer having no hydrogen atom bonded to a carbon atom, such as a tetrafluoroethylene/perfluoro(alkyl vinyl ether) copolymer, and a fatty acid metal salt having a melting point of less than 200°C, at a crosslinking temperature higher than the melting point of the fatty acid metal salt, and a fluoroelastomer composition containing the fluoroelastomer and a fatty acid metal salt having a melting point of less than 200°C.

## Description

### TECHNICAL FIELD

The present invention relates to a method for producing a crosslinked product and a fluoroelastomer composition.

### BACKGROUND ART

Since a fluoroelastomer particularly a fluoroelastomer having no hydrogen atom bonded to a carbon atom such as a perfluoroelastomer is excellent in mechanical properties, chemical resistance and heat resistance, a formed product of its crosslinked product has been used as a material of e.g. o-rings, gaskets, seal components, valves, etc. in automobiles, shipping, aircraft, general machinery, chemical plants, industrial equipment, robot components, etc.

In order to facilitate processing of the crosslinked product, various processing aids have been used. For example, Patent Documents 1, 2 and 3 disclose that a higher fatty acid metal salt known to have a function as a lubricant may be used for improving processability of a fluoroelastomer and improving properties of a crosslinked rubber.

### PRIOR ART DOCUMENTS

### PATENT DOCUMENTS

Patent Document 1: Japanese Patent No. 5527204
Patent Document 2: JP-A-2015-67659
Patent Document 3: WO2009/066553

### DISCLOSURE OF INVENTION

### TECHNICAL PROBLEM

The present inventors have found that if a fluoroelastomer composition comprising a higher fatty acid metal salt, especially a composition containing a fluoroelastomer having no hydrogen atom bonded to a carbon atom, is crosslinked, white foreign matters are likely to precipitate in the crosslinked product.

The object of the present invention is to provide a method for producing a crosslinked product in which white foreign matters hardly precipitate, while excellent properties such as mechanical properties, chemical resistance and heat resistance of a fluoroelastomer having no hydrogen atom bonded to a carbon atom are made use of, and a fluoroelastomer composition suitably used for the production method.

### SOLUTION TO PROBLEM

The present invention has the following constructions.
[1] A method for producing a crosslinked product, which comprises crosslinking a fluoroelastomer composition containing a fluoroelastomer having no hydrogen atom bonded to a carbon atom and a fatty acid metal salt having a melting point of less than 200°C, at a crosslinking temperature higher than the melting point of the fatty acid metal salt.
[2] The method for producing a crosslinked product according to [1], wherein the crosslinking temperature is at most 200°C.
[3] The method for producing a crosslinked product according to [1] or [2], wherein the crosslinking temperature is higher by at least 1°C than the melting point of the fatty acid metal salt.
[4] The method for producing a crosslinked product according to any one of [1] to [3], wherein the fatty acid metal salt is a compound represented by the following formula (3):

   (RCOO⁻)ₙMn⁺ (3)

   wherein R is a C₁₀₋₃₀ organic group, n is an integer of 2 or 3, M is an alkaline earth metal, Zn, Cd, Co, Sn, Cu, Pb, Ni or Al.
[5] The method for producing a crosslinked product according to any one of [1] to [4], wherein the content of the fatty acid metal salt in the fluoroelastomer composition is from 0.1 to 10 parts by mass per 100 parts by mass of the fluoroelastomer.
[6] The method for producing a crosslinked product according to any one of [1] to [5], wherein the fluoroelastomer composition further contains an organic peroxide, and the content of the organic peroxide is from 0.1 to 5 parts by mass per 100 parts by mass of the fluoroelastomer.
[7] The method for producing a crosslinked product according to any one of [1] to [6], wherein the fluoroelastomer composition further contains a crosslinking aid, and the content of the crosslinking aid is from 0.1 to 15 parts by mass per 100 parts by mass of the fluoroelastomer.
[8] The method for producing a crosslinked product according to [7], wherein the crosslinking aid is triallyl isocyanurate.
[9] The method for producing a crosslinked product according to [7], wherein the crosslinking aid is a fluorinated aromatic compound having at least two vinyl groups or allyl groups bonded to the aromatic ring.
[10] The method for producing a crosslinked product according to any one of [1] to [9], wherein the fluoroelastomer is a copolymer containing structural units based on tetrafluoroethylene and structural units based on a perfluoro(alkyl vinyl ether).
[11] A fluoroelastomer composition containing a fluoroelastomer having no hydrogen atom bonded to a carbon atom and a fatty acid metal salt having a melting point of less than 200°C.

### ADVANTAGEOUS EFFECTS OF INVENTION

According to the method for producing a crosslinked product of the present invention, in production of a crosslinked product by crosslinking a fluoroelastomer composition containing a fluoroelastomer having no hydrogen atom bonded to a carbon atom, formation of white foreign matters can be suppressed.

The fluoroelastomer composition of the present invention may be suitably used for the production method.

That is, according to the present invention, it is possible to obtain a crosslinked product which is excellent in mechanical properties, chemical resistance and heat resistance, and in which formation of foreign matters is suppressed.

### DESCRIPTION OF EMBODIMENTS

The method for producing a crosslinked product of the present invention comprises crosslinking a fluoroelastomer composition containing a fluoroelastomer having no hydrogen atom bonded to a carbon atom and a fatty acid metal salt having a melting point of less than 200°C, at a crosslinking temperature higher than the melting point of the fatty acid metal salt. In the method for producing a crosslinked product of the present invention, the crosslinked product obtained by crosslinking may be heated to be further crosslinked.

In this specification, a fluoroelastomer means an elastic copolymer having structural units based on a monomer containing a fluorine atom.

### [Fluoroelastomer composition]

The fluoroelastomer composition in the present invention contains a fluoroelastomer having no hydrogen atom bonded to a carbon atom and a fatty acid metal salt having a melting point of less than 200°C. The fluoroelastomer composition in the present invention may contain a crosslinking agent, a crosslinking aid, other additives, etc.

Further, the fluoroelastomer composition may contain two or more types of fluoroelastomers, and in such a case, one or more fluoroelastomers may be a fluoroelastomer having a hydrogen atom bonded to a carbon atom as described hereinafter. In a case where the fluoroelastomer composition contains two or more types of fluoroelastomers, unless otherwise specified, the fluoroelastomer in the fluoroelastomer composition means a mixture of the two or more types of fluoroelastomers.

Hereinafter a fluoroelastomer having no hydrogen atom bonded to a carbon atom may sometimes be referred as a "PF elastomer".

### (Fluoroelastomer)

The PF elastomer in the present invention is a fluoroelastomer having no hydrogen atom bonded to a carbon atom, and having fluorine atoms bonded to carbon atoms. The content of hydrogen atoms in the PF elastomer is, even in a case where a hydrogen atom is present in a terminal group such as a polymerization initiation residue or a chain transfer agent residue or in a case where a hydrogen atom not bonded to a carbon atom is present, at most 0.1 mass% including such a carbon atom.

Further, the PF elastomer preferably contains at least either of an iodine atom and a bromine atom. Both the iodine atom and the bromine atom function as a crosslinking site. The iodine atom or the bromine atom which functions as the crosslinking site may be present either at a terminal portion or at a non-terminal portion of the polymer chain, and is preferably present at the terminal portion of the polymer chain.

The terminal portion of the polymer chain means a portion which is present at the terminal of the polymer chain and which is a portion other than a portion derived from the monomer (that is, for example, a portion derived from the polymerization initiator or the chain transfer agent). Further, the iodine atom and the bromine atom which function as the crosslinking site may sometime be referred as "iodine atom or the like".

As a method of introducing the iodine atom or the like which functions as a crosslinking site into the fluoroelastomer, an introduction method by using a chain transfer agent having an iodine atom or the like or an introduction method of copolymerizing a perfluoromonomer containing an iodine atom or the like, at the time of production of the fluoroelastomer, may, for example, be mentioned.

A fluoroelastomer having an iodine atom or the like which functions as a crosslinking site at the terminal portion of the polymer chain is preferably produced in the presence of a chain transfer agent having an iodine atom or the like. Further, the atom which functions as a crosslinking site is preferably an iodine atom.

In the present invention, the PF elastomer is preferably a CF elastomer, a CX elastomer or a CG elastomer as described hereinafter, more preferably a CF elastomer or a CX elastomer, and in view of excellent chemical resistance and heat resistance of the resulting crosslinked product, further preferably a CF elastomer.

### <CF elastomer>

In this specification, a "CF elastomer" is a fluoroelastomer having a polymer chain composed of carbon atoms, fluorine atoms and oxygen atoms excluding the terminal portion. It is preferably a fluoroelastomer having a chain transfer agent residue having an iodine atom or the like which functions as a crosslinking site at the terminate portion of the polymer chain.

The CF elastomer is a copolymer having structural units based on at least two types of perfluoromonomers. One of the two perfluoromonomers is a perfluoroolefin, and the other is a perfluoro(vinyl ether) (hereinafter sometimes referred to as "PAVE").

The perfluoroolefin is preferably tetrafluoroethylene (TFE) or hexafluoropropylene (HFP).

PAVE is preferably a compound represented by the following formula (1) (hereinafter sometimes referred to as "compound (1)").

CF2=CFO(R^{f11}O)n(R^{f12}O)mR^{f1} (1)

wherein R^{f11} is a C2-6 linear or branched perfluoroalkylene group, R^{f12} is a C₁₋₆ linear or branched perfluoroalkylene group, m and n are each independently an integer of from 0 to 10, and R^{f1} is a C₁₋₆ linear or branched perfluoroalkyl group, provided that when both m and n are at least 1, either of R^{f11}O and R^{f12}O may be disposed on the CF₂=CFO side, the bonding order of n pieces of R^{f11}O and n pieces of R^{f12}O is not limited and they may be disposed in a block, alternately or randomly.

The compound (1) is preferably a compound wherein m=0 and n=0 or 1. Its specific examples include perfluoro(methyl vinyl ether), perfluoro(ethyl vinyl ether), perfluoro(propyl vinyl ether), perfluoro(methoxyethyl vinyl ether), perfluoro(ethoxyethyl vinyl ether) and perfluoro(propoxypropyl vinyl ether), and preferred are perfluoro(methyl vinyl ether), perfluoro(ethyl vinyl ether) and perfluoro(propyl vinyl ether).

Further, as the compound (1), a compound (1) wherein R^{f11} is CF₂CF₂, R^{f12} is CF2, R^{f1} is a C₁₋₄ linear or branched perfluoroalkyl group, n is from 0 to 3, m is from 0 to 4, and (n+m) is from 1 to 7, may be mentioned. Its specific examples include CF₂=CFO-(CF₂CF₂O)-(CF₂O)₄-CF3, CF₂=CFO-(CF₂CF₂O)-(CF₂O)₂-CF₃, CF₂=CFO-(CF₂CF₂O)2-CF₂CF₃, CF₂=CFO-(CF₂O)-CF₃ and CF₂=CFO-(CF₂O)₂-CF₃, and preferred are CF₂=CFO-(CF₂CF₂O)-(CF₂O)₄-CF₃, CF₂=CFO-(CF₂CF₂O)-(CF₂O)₂-CF₃ and CF₂=CFO-(CF₂CF₂O)₂-CF₂CF₃.

PAVE may be used alone or in combination of two or more.

The CF elastomer may be a TFE/PAVE copolymer, a HFP/PAVE copolymer or a TFE/PAVE/HFP copolymer, and is preferably a TFE/PAVE copolymer. Such a copolymer preferably has an iodine atom or the like only at the terminal portion of the polymer chain. The CF elastomer is excellent in heat resistance.

The CF elastomer may have, in addition to structural units based on a perfluoroolefin (hereinafter sometimes referred to as "perfluoroolefin units") and structural units based on PAVE (hereinafter sometimes referred to as "PAVE units"), structural units based on other perfluoromonomer. Such other perfluoromonomer does not include the after-mentioned monomer CX and monomer CG. Hereinafter other perfluoromonomer will be referred to as "monomer CZ". Further, structural units based on the monomer CZ will sometimes be referred to as "monomer CZ units".

As the monomer CZ, a compound of the following formula (2) (hereinafter sometimes referred to as "compound (2)") may be mentioned.

CF₂=CFOR^{f2}CF=CF₂ (2)

wherein R^{f2} is a C₁₋₂₅ linear or branched perfluoroalkylene group, and R^{f2} may contain one or more etheric oxygen atoms.

Specific examples of the compound (2) include CF₂=CFO(CF₂)₄CF=CF₂, CF₂=CFO(CF₂)₃OCF=CF₂, CF₂=CFO(CF₂)₄OCF=CF₂, CF₂=CFO(CF₂)₅OCF=CF₂, CF₂=CFO(CF₂)₆OCF=CF₂ and CF₂=CFO(CF₂)₄OCF(CF₃)CF₂OCF=CF₂, and preferred are CF₂=CFO(CF₂)₄CF=CF₂, CF₂=CFO(CF₂)₃OCF=CF₂ and CF₂=CFO(CF₂)₄OCF=CF₂.

In a case where the CF elastomer has structural units based on the compound (2), it is a fluoroelastomer having a branched structure and has more than 2 polymer chain terminals on average per molecule. Accordingly, the number of the iodine atom or the like which functions as the crosslinking site increases, and the CF elastomer having structural units based on the compound (2) is excellent in the crosslinking reactivity as compared with a linear fluoroelastomer having no branch and having 2 terminal groups of the polymer chain.

The content of the PAVE units in the CF elastomer is preferably from 20 to 70, more preferably from 25 to 50, particularly preferably from 30 to 45 by molar ratio based on the total amount of the perfluoroolefin units and the PAVE units being 100. Further, in a case where the CF elastomer has the monomer CZ units, the content of the monomer CZ units is preferably from 0.01 to 5, more preferably from 0.01 to 3, particularly preferably from 0.05 to 1 by molar ratio based on the total amount of all the structural units constituting the CF elastomer being 100.

The total content of iodine atoms or the like in the CF elastomer is preferably from 0.1 to 30 µmol/g, more preferably from 0.2 to 20 µmol/g by the molar amount per 1 g of the CF elastomer. A fluoroelastomer composition containing a CF elastomer having a total content of iodine atoms or the like in the CF elastomer within such a range is excellent in the crosslinking reactivity.

The CF elastomer is particularly preferably a TFE/PAVE copolymer or a TFE/PAVE/monomer CZ copolymer having iodine atoms only at the terminal portion of the polymer chain, with a view to controlling the number of the crosslinking reaction sites and obtaining rubber properties.

### <CX elastomer>

In this specification, a "CX elastomer" is a fluoroelastomer having at least perfluoroolefin units, PAVE units and structural units based on a perfluoromonomer containing an iodine atom or the like (hereinafter sometimes referred to as "monomer CX"). The CX elastomer may further contain the monomer CZ units.

Hereinafter structural units based on the monomer CX will sometimes be referred to as "monomer CX units".

Specific examples of the monomer CX include CF₂=CFBr, CF₂=CFI, CF₂=CFOCF₂CF₂Br and CF₂=CFOCF₂CF₂I, and preferred are CF₂=CFBr, CF₂=CFOCF₂CF₂Br and CF₂=CFOCF₂CF₂I, more preferred is CF₂=CFOCF₂CF₂I.

The CX elastomer, which has monomer CX units, is a fluoroelastomer having iodine atoms or the like which function as the crosslinking site at the non-terminal portion of the polymer chain.

In the CX elastomer, the content of the PAVE units and the content of the monomer CZ units in a case where the CX elastomer has the monomer CZ units, based on the total amount of the perfluoroolefin units and the PAVE units being 100, are the same as the contents in the CF elastomer.

Further, the content of the monomer CX units in the CX elastomer is preferably from 0.01 to 5, more preferably from 0.01 to 3, particularly preferably from 0.05 to 1 by molar ratio based on the total amount of all the structural units in the CX elastomer being 100.

### <CG elastomer>

In this specification, a "CG elastomer" is a fluoroelastomer having at least perfluoroolefin units, PAVE units and structural units based on a perfluoromonomer having one or more groups selected from the group consisting of a nitrile group, an aminocarbonyl group, a carboxy group and an ester group (hereinafter sometimes referred to as "monomer CG"). The CG elastomer may further contain the monomer CZ units or monomer CX units.

The structural units based on the monomer CZ may sometimes be referred to as "monomer CG units".

Specific examples of the monomer CG include CF₂=CFG, CF₂=C(CF₃)G, CF₂=CFO(CF₂)ₙG and CF₂=CFOCF₂CF(CF₃)OCF₂CF₂G. In the above formulae, G is a nitrile group, an aminocarbonyl group, a carboxy group or an ester group, and n is an integer of from 1 to 10. The ester group is a group represented by -C(=O)O-R^{G}, and R^{G} is a C₁₋₁₀ linear or branched perfluoroalkyl group. The monomer CG is preferably CF₂=CFO(CF₂)₅CN or perfluoro(8-cyano-5-methyl-3,6-dioxa-1-octene).

In the CG elastomer, based on the total amount of perfluoroolefin units and PAVE units being 100, the content of the PAVE units, the content of the monomer CZ units in a case where the CG elastomer has the monomer CZ units, and the content of the monomer CX units in a case where the CG elastomer has the monomer CX units, are the same as the contents in the CF elastomer and the CX elastomer.

Further, the content of the monomer CG units in the CG elastomer is preferably from 0.01 to 5, more preferably from 0.01 to 3, particularly preferably from 0.05 to 1 by molar ratio based on the total amount of all the structural units in the CG elastomer being 100.

### <Fluoroelastomer having hydrogen atom bonded to carbon atom>

The fluoroelastomer in the present invention may contain a fluoroelastomer having a hydrogen atom bonded to a carbon atom (hereinafter sometimes referred to as "CH elastomer") within a range not to impair the effects of the present invention. In order to further improve mechanical properties, chemical resistance and heat resistance of the obtainable crosslinked product, in the fluoroelastomer in the present invention, the content of the CH elastomer is preferably at most 50 parts by mass, more preferably at most 30 parts by mass per 100 parts by mass of the PF elastomer, and it is particularly preferred that no CH elastomer is contained. The content of hydrogen atoms in the CH elastomer is higher than 0.1 mass%.

### (Properties of fluoroelastomer)

The Mooney viscosity of the fluoroelastomer is preferably from 50 to 250, more preferably from 50 to 200, particularly preferably from 50 to 150. The Mooney viscosity is an index to the molecular weight, and when the Mooney viscosity is high, that is when the molecular weight is high, physical properties of the crosslinked product are favorable, but the flowability tends to be low and the processability tends to be poor. On the other hand, when the Mooney viscosity is low, that is when the molecular weight is low, flowability tends to be high and processability tends to be favorable, however, physical properties of the crosslinked product tend to be poor. When the Mooney viscosity of the fluoroelastomer is within the above range, excellent processability will be achieved, and the crosslinked product will be excellent in rubber properties.

The Mooney viscosity is measured by setting the preheating time to be one minute at 100°C and the rotor rotating time to be 4 minutes, in accordance with JIS K6300 using a large rotor having a diameter of 38.1 mm and a thickness of 5.54 mm.

It is also possible to employ as an index to the molecular weight the storage elastic modulus. The storage elastic modulus of the fluoroelastomer is preferably from 50 to 700 kPa, more preferably from 300 to 650 kPa, particularly preferably from 400 to 600 kPa. When the storage elastic modulus is high, that is when the molecular weight is high, physical properties of the obtainable crosslinked product tend to be favorable, however, the flowability tends to be low and the processability tends to be poor. On the other hand, when the storage elastic modulus is low, that is when the molecular weight is low, the flowability tends to be high and the processability tends to be favorable, however, physical properties of the obtainable crosslinked product tend to be poor. When the storage elastic modulus of the fluoroelastomer is within the above range, excellent processability will be achieved, and the obtainable crosslinked product will be excellent in rubber properties.

The storage elastic modulus is measured by a dynamic viscoelasticity measuring apparatus (manufactured by Alpha Technologies, RPA2000) in accordance with ASTM D5289 and ASTM D6204 at a temperature of 100°C with an amplitude of 0.5 degree at a vibration frequency of 50 times/min.

### (Fatty acid metal salt)

The fluoroelastomer composition in the present invention contains, as a processing aid which functions as a lubricant, a fatty acid metal salt. The melting point of the fatty acid metal salt of less than 200°C, preferably less than 170°C, more preferably less than 150°C, is suitable for the method for producing a crosslinked product of the present invention.

The fatty acid metal salt is preferably a compound of the following formula (3) (hereinafter sometimes referred to as "compound (3)").

(RCOO⁻)ₙMⁿ⁺ (3)

wherein R is a C₁₀₋₃₀ organic group, n is an integer of 2 or 3, and M is an alkaline earth metal, Zn, Cd, Co, Sn, Cu, Pb, Ni or Al.

R is preferably a C₁₀₋₂₅ organic group, more preferably a C₁₀₋₂₀ organic group, particularly preferably a C₁₁₋₁₇ organic group.

The organic group may be either saturated or unsaturated, and may have a substituent. The organic group is preferably an aliphatic hydrocarbon group, more preferably a linear aliphatic hydrocarbon group, particularly preferably a saturated linear aliphatic hydrocarbon group.

The counter anion of the metal in the compound (3) may be carboxylate anion of stearic acid, lauric acid, ricinoleic acid, palmitic acid or myristic acid, preferably a carboxylate anion of stearic acid, lauric acid or ricinoleic acid, more preferably a carboxylate anion of stearic acid.

M is preferably an alkaline earth metal, Zn, Pb or Al, more preferably Zn, Ca or Ba, further preferably Zn or Ca.

The compound (3) may be calcium stearate (147 to 149°C), zinc stearate (140°C), magnesium stearate (140°C), cadomium stearate (134°C), cobalt stearate (75°C), lead stearate (110°C), copper stearate (115°C), nickel stearate (85°C), zinc laurate (110 to 120°C), barium ricinoleate (117 to 123°C) or zinc ricinoleate (94 to 102°C), preferably calcium stearate, zinc stearate, magnesium stearate, cadomium stearate, cobalt stearate, zinc stearate, copper stearate or nickel stearate, more preferably calcium stearate, zinc stearate or magnesium stearate, further preferably calcium stearate or zinc stearate, particularly preferably calcium stearate. Brackets following the compound names represent melting points of the compounds.

The compound (3) is a compound commonly known as a metal salt of a higher fatty acid and may be either a natural component such as an animal fatty acid or may be an artificial component. It may also be a mixture of two or more fatty acids differing in the number of carbon atoms.

The content of the compound (3) in the fluoroelastomer composition is preferably from 0.1 to 10 parts by mass, more preferably from 0.2 to 5 parts by mass, further preferably from 0.2 to 3 parts by mass, particularly preferably from 0.3 to 2 parts by mass per 100 parts by mass of the fluoroelastomer.

If the content is lower than the above range, the forming processability tends to be poor, and when the content is higher than the above range, heat resistance of the obtainable crosslinked rubber component may decrease. When the content is within the above range, excellent forming processability will be achieved, and formation of white foreign matters in a crosslinked product obtained by crosslinking the fluoroelastomer composition can be suppressed.

### (Crosslinking agent)

The fluoroelastomer composition in the present invention preferably further contains a crosslinking agent. As the crosslinking agent, known crosslinking agents may be used.

The crosslinking agent is, in a case where the fluoroelastomer has nitrile groups, preferably an organic tin compound. In a case where the fluoroelastomer contains iodine atoms or the like, it is preferably an organic peroxide. Since the organic peroxide increases the probability of reaction at the crosslinking sites and contributes to improvement of mechanical properties, chemical resistance and heat resistance of the resulting crosslinked product, the fluoroelastomer composition of the present invention preferably contains an organic peroxide as the crosslinking agent.

The organic peroxide is one which readily generates radicals by heating. The organic peroxide is preferably one having a one minute half life temperature (the temperature at which the half life is one minute) of from 80 to 220 °C, more preferably diisopropyl peroxydicarbonate, 1,1-bis(tert-hexylperoxy)-3,5,5-trimethylcyclohexane, 2,5-dimethylhexane-2,5-dihydroperoxide, di-tert-butyl peroxide, tert-butylcumyl peroxide, dicumyl peroxide, α,α'-bis(tert-butylperoxy)-p-diisopropylbenzene, 2,5-dimethyl-2,5-bis(tert-butylperoxy)hexane, 2,5-dimethyl-2,5-bis(tert-butylperoxy)-3-hexine, dibenzoyl peroxide, tert-butyl peroxybenzoate, 2,5-dimethyl-2,5-bis(benzoylperoxy)hexane, tert-butyl peroxymaleate or tert-hexylperoxyisopropyl monocarbonate, more preferably diisopropyl peroxydicarbonate, 2,5-dimethyl-2,5-bis(tert-butylperoxy)hexane or tert-butyl peroxybenzoate.

The organic peroxide as the crosslinking agent may be used alone or in combination of two or more.

The content of the organic peroxide in the fluoroelastomer composition is preferably from 0.1 to 5 parts by mass, more preferably from 0.2 to 4 parts by mass, particularly preferably from 0.5 to 3 parts by mass per 100 parts by mass of the fluoroelastomer.

When the content is at least the lower limit value of the above range, the fluoroelastomer composition is excellent in the crosslinking reactivity, and when the content is at most the upper limit value of the above range, the organic peroxide is excellent in the crosslinking efficiency, and the amount of decomposed product is suppressed.

### (Crosslinking aid)

The fluoroelastomer composition of the present invention preferably further contains a crosslinking aid.

The crosslinking aid may, for example, be triallyl cyanurate, triallyl isocyanurate, triacrylformal, triallyl trimellitate, dipropargyl terephthalate, diallyl phthalate, tetraallyl terephthalamide, triallyl phosphate, trimethallyl isocyanurate, 1,3,5-triacryloylhexahydro-1,3,5-triazine, m-phenylenediamine bismaleimide, p-quinone dioxime, p,p'-dibenzoylquinone dioxime, a vinyl group-containing siloxane oligomer (such as polymethylvinylsiloxane or polymethylphenylvinylsiloxane), or a fluorinated aromatic compound having at least two vinyl groups or allyl groups bonded to the aromatic ring.

The fluorinated aromatic compound as the crosslinking aid may, for example, be a compound having at least two groups represented by the following formula (4) and having at least two of the groups represented by the following formula (4) bonded to the fluorinated aromatic ring: 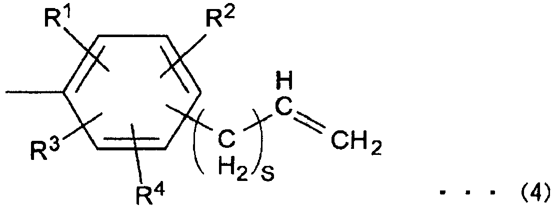 wherein s is 0 or 1, and R¹, R², R³ and R⁴ are each independently a hydrogen atom or a fluorine atom.

The fluorinated aromatic ring in the fluorinated aromatic compound may be a group having a fluorine atom or a fluorine-containing group bonded to an aromatic ring such as a benzene ring, a condensed ring containing a benzene ring (such as a naphthalene ring, an anthracene ring, a phenanthrene ring or a pyrene ring) or a connected ring such as biphenyl. Further, the total number of the vinyl groups and the allyl groups per molecule is preferably from 2 to 4.

The crosslinking aid is preferably triallyl isocyanurate or the fluorinated aromatic compound. In view of excellent heat resistance, the crosslinking aid is particularly preferably the fluorinated aromatic compound.

The crosslinking aid may be used alone or in combination of two or more.

The content of the crosslinking aid in the fluoroelastomer composition is preferably from 0.1 to 15 parts by mass, more preferably from 0.1 to 12 parts by mass, particularly preferably from 0.1 to 10 parts by mass per 100 parts by mass of the fluoroelastomer.

When the content is within the above range, the fluoroelastomer composition is excellent in the crosslinking reactivity, and the obtainable crosslinked product is excellent in rubber physical properties such as chemical resistance, heat resistance and compression set.

### (Other additives)

The fluoroelastomer composition in the present invention may contain additives other than the above.

Such other additives may, for example, be an acid acceptor, a scorch retardant, a pigment, a filler, a reinforcing material or a processing aid other than the fatty acid metal salt.

The acid acceptor may be an oxide or hydroxide of a bivalent metal, or hydrotalcite. It may be specifically magnesium oxide, calcium oxide, zinc oxide, lead oxide, copper oxide, magnesium oxide, aluminum hydroxide, calcium hydroxide or hydrotalcite. The acid acceptor may be used alone or in combination of two or more.

The content of the acid acceptor in the fluoroelastomer composition is preferably from 0.1 to 20 parts by mass, more preferably from 0.2 to 10 parts by mass, particularly preferably from 0.5 to 5 parts by mass per 100 parts by mass of the fluoroelastomer.

The scorch retardant may be a phenolic hydroxy group-containing compound such as bisphenol A, bisphenol AF, phenol or ethyl p-hydroxybenzoate, a quinone such as hydroquinone or hydroquinone monomethyl ether, or an α-methylstyrene dimer such as 2,4-bis(3-isopropylphenyl)-4-methyl-1-pentene, 2-(3-isopropylphenyl)-4-(4-isopropylphenyl)-4-methyl-1-pentene or 2,4-bis(4-methylphenyl)-4-methyl-1-pentene.

The content of the scorch retardant in the fluoroelastomer composition is preferably from 0.1 to 5 parts by mass, more preferably from 0.1 to 3 parts by mass, particularly preferably from 0.1 to 2 parts by mass per 100 parts by mass of the fluoroelastomer.

The pigment, the filler and the reinforcing material may be carbon black, titanium oxide, silicon dioxide, clay, tulc, polytetrafluoroethylene, polyvinylidene fluoride, polyvinyl fluoride, polychlorotrifluoroethylene, a TFE/ethylene copolymer, a TFE/propylene copolymer or a TFE/vinylidene fluoride copolymer.

The content of other additives in the fluoroelastomer composition is preferably from 0.1 to 100 parts by mass, more preferably from 0.5 to 50 parts by mass, particularly preferably from 0.5 to 30 parts by mass per 100 parts by mass of the fluoroelastomer.

The processing aid other than the fatty acid metal salt may be synthetic wax such as polyethylene wax or a fatty acid ester such as glycerine monooleate.

### [Method for producing fluoroelastomer composition]

The fluoroelastomer composition in the present invention may be produced by blending the fluoroelastomer with an essential component comprising the fatty acid metal salt having a melting point of less than 200°C. As the case requires, at least one optional component selected from the crosslinking agent, the crosslinking aid and other additives may be blended.

### (Method for producing fluoroelastomer)

The fluoroelastomer in the present invention may be produced by subjecting a desired monomer mixture to radical polymerization by a conventional method.

As the radical polymerization method, known polymerization method such as emulsion polymerization, solution polymerization, suspension polymerization or bulk polymerization may be mentioned. Particularly preferred is emulsion polymerization using a water-soluble radical polymerization initiator. Emulsion polymerization is suitable for production of a high molecular weight fluoroelastomer.

In emulsion polymerization, a monomer mixture is polymerized in the presence of a radical polymerization initiator, an aqueous medium and an emulsifying agent and as a case requires, a chain transfer agent to prepare a fluoroelastomer.

The polymerization temperature is preferably from 0 to 100°C, more preferably from 10 to 90°C. The polymerization time is preferably from 6 to 24 hours, more preferably from 6 to 12 hours. The polymerization pressure is preferably from 0.1 to 20 MPa, more preferably from 0.3 to 10 MPa. Within such ranges, the monomer conversion rate is high, the polymer yield is high, and excellent productivity is achieved.

The radical polymerization initiator may be a known radical polymerization initiator used for production of a perfluoroelastomer. The radical polymerization initiator may be properly selected depending upon the polymerization method. In the case of polymerization in an aqueous medium such as emulsion polymerization, a water-soluble radical polymerization initiator is preferred. In the case of solution polymerization, an organic peroxide initiator or an azo initiator is preferred.

The water-soluble radical polymerization initiator may be a persulfate such as ammonium persulfate, hydrogen peroxide, disuccinic acid peroxide, or an organic initiator such as azobisisobutylamidine dihydrochloride. Further, it is possible to use a redox initiator comprising a combination of a persulfate or hydrogen peroxide with a reducing agent such as acid sodium sulfite or sodium thiosulfate, or an inorganic initiator comprising the redox initiator and a small amount of iron, ferrous salt or silver sulfate in combination.

The radical polymerization initiator may be added all at once at the time of initiation of the polymerization, or may be added continuously or intermittently. It is preferably added continuously or intermittently in view of uniformity of the polymerization reaction and with a view to controlling the molecular weight distribution of the obtainable perfluoroelastomer.

The amount of the radical polymerization initiator is preferably from 0.01 to 3 mass%, more preferably from 0.1 to 1 mass% based on the total mass of all the monomers.

The aqueous medium may be water or a mixture of water and a water-soluble organic solvent.

The water-soluble organic solvent may be tert-butanol, propylene glycol, dipropylene glycol, dipropylene glycol monomethyl ether or tripropylene glycol. When the aqueous medium contains a water-soluble organic solvent, solubility and dispersability of the monomer and dispersion stability of the formed fluoroelastomer improve, thus leading to high productivity. On the other hand, in view of easy separation, recovery and regeneration in the post-treatment process after polymerization, if the solubility and dispersability of the monomer, and dispersion stability and productivity of the formed fluoroelastomer can be secured even without adding a water-soluble organic solvent, it is preferred not to use a water-soluble organic solvent.

The aqueous medium is preferably water.

The emulsifying agent may be an emulsifying agent commonly used for emulsion polymerization. In view of excellent mechanical and chemical stability of the obtainable latex, an anionic emulsifying agent is more preferred.

The anionic emulsifying agent may be an anionic hydrocarbon emulsifying agent or an anionic fluorinated emulsifying agent.

The anionic hydrocarbon emulsifying agent may, for example, be lauryl sodium sulfate, lauryl ammonium sulfate or sodium dodecylbenzenesulfonate.

The anionic fluorinated emulsifier may be anionic fluorinated sulfonic acid, such as perfluorooctanesulfonic acid or C₆F₁₃CH₂CH₂SO₃H.

Use of a chain transfer agent is preferred with a view to properly controlling the molecular weight of the fluoroelastomer. The chain transfer agent is preferably a compound having an iodine atom or the like. For example, a diodo compound having two iodine atoms or a monoiodo monobromo compound having one iodine atom and one bromine atom.

Particularly, for production of a fluoroelastomer having an iodine atom or the like at the terminal portion of the polymer chain, it is preferred to use a chain transfer agent having an iodine atom or the like.

The chain transfer agent having an iodine atom or the like is preferably a compound of the following formula (5) or the following formula (6) (hereinafter sometimes referred to as "compound (5)" or "compound (6)").

IR^{f4}I (5)

IR^{f5}Br (6)

wherein R^{f4} and R^{f5} are each independently a C₁₋₁₂ linear or branched fluoroalkylene group or a C₂₋₁₂ linear or branched fluoroalkylene group having at least one etheric oxygen atom between carbon atoms (sometimes referred to as an "oxafluoroalkylene group").

R^{f4} and R^{f5} are preferably a C₃₋₁₂ fluoroalkylene group or oxafluoroalkylene group, more preferably a C₃₋₁₂ perfluoroalkylene group.

The compound (5) may be diiodofluoromethane, 1,2-diiodoperfluoroethane, 1,3-diiodoperfluoropropane, 1,4-diiodoperfluorobutane, 1,5-diiodoperfluoropentane, 1,6-diiodoperfluorohexane, 1,7-diiodoperfluoroheptane or 1,8-diiodoperfluorooctane, and is preferably 1,4-diiodoperfluorobutane or 1,6-diiodoperfluorohexane.

The compound (6) may be 1-iodo-4-bromoperfluorobutane or 1-iodo-6-bromoperfluorohexane.

The chain transfer agent may be added at the time of initiation of radical polymerization, or may be sequentially added as the polymerization progresses. In a case where a chain transfer agent having an iodine atom or the like is used, it is preferably added at the time of initiation of radical polymerization.

The amount of the chain transfer agent is preferably from 0.01 to 5 mol%, more preferably from 0.05 to 1 mol% based on the total number of moles of all the monomers.

In emulsion polymerization, a pH buffering agent may be used.

The pH buffering agent may be disodium hydrogen phosphate, sodium dihydrogen phosphate, sodium bicarbonate or an inorganic salt of e.g. a hydrate thereof.

### (Blending method)

The blending method is not particularly limited and may be a known method. Preferred is a method of kneading essential components, or essential components and optional components, by a kneading machine such as an open roll, a Banbury mixer or a kneader. Further, the above components may be kneaded and blended in a state dissolved or dispersed in a solvent. Further, in a case where the fluoroelastomer is two or more types of fluoroelastomers, individually produced fluoroelastomers may be mixed and kneaded by a kneading machine or the like to produce a fluoroelastomer mixture, or two or more types of fluoroelastomers may be used and mixed and kneaded simultaneously when additives or the like are mixed to the after-mentioned fluoroelastomer and kneaded.

As the order of blending the respective components, it is preferred that a component which is hardly reacted or decomposed by heat is sufficiently kneaded with the fluoroelastomer, and then a component which is readily reacted or decomposed by heat is kneaded. For example, it is preferred that the crosslinking aid is kneaded with the fluoroelastomer, and then the crosslinking agent is kneaded. At the time of kneading, in order that the crosslinking reaction does not proceed, it is preferred to cool the kneading machine with water to maintain it within a temperature range of from 20 to 120°C. The kneading temperature is more preferably from 40 to 60°C. The kneading time is preferably from 5 to 60 minutes, more preferably from 10 to 30 minutes.

### [Primary crosslinking]

In the method for producing a crosslinked product of the present invention, the fluoroelastomer composition containing the fatty acid metal salt is crosslinked at a crosslinking temperature higher than the melting point of the fatty acid metal salt.

To chemically and three-dimensionally bond the fluoroelastomer to irreversibly change it into a state with strength, restorability and stretching properties will be called crosslinking or primary crosslinking and hereinafter will be referred to as "primary crosslinking".

The crosslinked product obtained by primary crosslinking (hereinafter sometimes referred to as a primary crosslinked product) may be used as a formed product as it is, or in a case where crosslinking is insufficient only by primary crosslinking, the product may further be heated e.g. in a heating oven to make crosslinking sufficiently proceed. Hereinafter, crosslinking of the primary crosslinked product will sometimes be referred to as secondary crosslinking.

The crosslinking temperature in primary crosslinking is preferably higher by at least 1°C, more preferably at least 3°C, further preferably at least 5°C than the melting point of the fatty acid metal salt. If the crosslinking temperature is too high, crosslinking of the surface of the fluoroelastomer composition at a portion where the heating apparatus and the fluoroelastomer composition are in contact with each other quickly proceeds, and forming is difficult in some cases. The crosslinking temperature in primary crosslinking is preferably at most 200°C, more preferably at most 190°C, further preferably at most 170°C. If the crosslinking temperature is too low, crosslinking of the fluoroelastomer composition will not sufficiently proceed, and even if it proceeds, it will take a long period of time, and accordingly the crosslinking temperature is preferably at least 130°C.

If a fluoroelastomer composition containing a fatty acid metal salt having a melting point of at least the crosslinking temperature in primary crosslinking is crosslinked to form a crosslinked product, the fatty acid metal salt is concentrated in the outside of the crosslinked product, thus leading to formation of white foreign matters at the edge of the formed product or at a portion commonly called burr excluding from the formed product. Formation of white foreign matters at the edge of the formed product leads to failure in appearance and in function. Accordingly, it is essential in obtaining the effects of the present invention that the crosslinking temperature at the time of crosslinking the fluoroelastomer composition is higher than the melting point of the fatty acid metal salt used, to suppress formation of white foreign matters.

The heating time in primary crosslinking is preferably from 5 to 40 minutes, more preferably from 10 to 30 minutes.

The fluoroelastomer composition may be formed into a shape of the desired formed product and then subjected to the production method of the present invention to obtain a crosslinked product, or may be formed into a shape of the desired formed product simultaneously with being subjected to the production method of the present invention to obtain a crosslinked product.

As a method of forming the fluoroelastomer composition, a known forming method such as extrusion, injection molding, transfer molding or press molding may be employed.

In the case of press molding, preferred is a molding method using vacuum press, vacuum pressing or a vacuum mold, capable of evacuating air involved at the time of crosslinking or a generated gas.

### [Secondary crosslinking]

By secondary crosslinking the primary crosslinked product, crosslinking of the fluoroelastomer composition will sufficiently proceed, and the residue of other components such as the crosslinking agent contained in the crosslinked product can be decomposed and volatilized, whereby the amount of such components contained in the formed product can be reduced. Accordingly, it is preferred to conduct secondary crosslinking following primary crosslinking.

The heating temperature in secondary crosslinking is preferably from 150 to 330°C, more preferably from 180°C to 320°C, further preferably from 200 to 300°C. Even if the primary crosslinked product is heated in secondary crosslinking at a temperature of the melting point of the fatty acid metal salt or higher, the white foreign matters formed in primary crosslinking cannot be eliminated, and it is preferred to conduct secondary crosslinking at a temperature of at least the temperature at which the crosslinked product is used.

The heating time in secondary crosslinking is preferably from 1 to 48 hours, more preferably from 2 to 24 hours.

Secondary crosslinking may be conducted in the air or in an inert gas non-reactive with the fluoroelastomer. Particularly in a case where the crosslinked product is thick, or in a case where the crosslinking temperature in secondary crosslinking is higher than 250°C, secondary crosslinking is preferably conducted in an inert gas. By conducting secondary crosslinking in an inert gas, the resulting crosslinked product will be excellent in the heat resistance.

The inert gas is not particularly limited so long as it is not reactive with the fluoroelastomer, and may be specifically nitrogen or argon, and is preferably nitrogen.

The heating apparatus used for secondary crosslinking is preferably an inert gas oven.

### [Mechanism of action]

In order to study the reason why white foreign matters precipitate in the crosslinked product, the present inventors have analyzed the white foreign matters and confirmed that the white foreign matters are derived from the fatty acid metal salt as the crosslinking aid. And, they have conducted various studies on the reason of precipitation of the white foreign matters and as a result, considered that the fatty acid metal salt precipitates at the time of crosslinking due to low compatibility between the fatty acid metal salt and the PF elastomer. They have found that the white foreign matters do not form when the fluoroelastomer composition is crosslinked at a crosslinking temperature higher than the melting point of the fatty acid metal salt, and accomplished the present invention. Such remarkable effects of the present invention are considered to be achieved as follows. The fatty acid metal salt is melted at the time of crosslinking, whereby compatibility between the PF elastomer and the fatty acid metal salt improves and as a result, precipitation of white foreign matters on the surface of the obtainable crosslinked product is suppressed.

### EXAMPLES

Now, the present invention will be described in further detail with reference to Examples. However, the present invention is by no means restricted to the following Examples. The respective measurements were conducted by the following methods.

### (NMR analysis)

The ¹H-NMR spectrum and the ¹⁹F-NMR spectrum were measured by FT-NMR apparatus JNM-AL300 manufactured by JEOL Ltd.

### (Glass transition temperature)

To determine the glass transition temperature (Tg), using DSC Q-100 manufactured by TA Instruments, measurement was conducted under conditions of heating the sample to 135°C at a heating rate of 10°C/min, cooling it at a cooling rate of 20°C/min and heating it to 135°C again at a heating rate of 10°C/min, and the temperature at the inflection point in the obtained DSC curve was taken as Tg.

### (Melting point)

To determine the melting point (Tm), using DSC Q-100 manufactured by TA Instruments, measurement was conducted under conditions of heating the sample to 135°C at a heating rate of 10°C/min, cooling it at a cooling rate of 20°C/min and heating it to 135°C again at a heating rate of 10°C/min, and the temperature at the peak top of the endothermic peak of the obtained DSC curve was taken as Tm. In a case where a plurality of Tms were observed, the respective Tms are represented as Tm₁, Tm₂, Tm₃ and so on from the lower side. The reason why a plurality of Tms were observed is considered to be due to presence of a plurality of crystalline states.

### (Number of white foreign matters formed)

9 crosslinked products were prepared in each of Examples and Comparative Examples, and the obtained crosslinked products were visually observed to confirm whether white foreign matters formed or not. The number of white foreign matters formed was represented by a fraction consisting of the number of white foreign matters observed as the numerator and 9 as the denominator. A case where forming by crosslinking could not be conducted was represented as "forming failed".

### (Evaluation)

Considering whether forming was possible or not and the number of white foreign matters formed, a case judged that a crosslinked product having desired properties could be obtained, was rated as "A" and a case judged that such a crosslinked product could not be obtained was rated as "B".

### (Preparation of fluorinated aromatic compound (X))

In a 1 L four-necked flask equipped with a three-way cock for introducing nitrogen and a thermocouple thermometer, 25.0 g of perfluorotoluene and 68.7 g of p-acetoxystyrene were put, dissolved in 385.0 g of diglyme, and 102.5 g of a 48% aqueous sodium hydroxide solution was added, followed by stirring for reaction. The temperature of the reaction liquid was controlled at 60°C, and the reaction was conducted for 6 hours. Then, the reaction crude liquid was dropped on 1,744 g of 0.5 mol/L hydrochloric acid, whereupon white solid was precipitated. The solid obtained by precipitation was collected by filtration and washed twice with deionized water to obtain 30.1 g (yield: 53.0%) of fluorinated aromatic compound (X) in the form of a white solid.

Physico-chemical properties of the obtained fluorinated aromatic compound (X) are shown below.

¹H-NMR spectrum (300.4 MHz, solvent: deuterated acetone, standard: tetramethylsilane, internal standard: bis(trifluoromethyl)benzene) δ (ppm): 7.50, 7.15, 6.75, 5.75, 5.20. ¹⁹F-NMR spectrum (282.7 MHz, solvent: deuterated acetone, standard: trichlorofluoromethane, internal standard: bis(trifluoromethyl)benzene) δ (ppm): -56.7, -142.0. Tg=-0.4°C. Tm₁=122.1°C, Tm₂=130.2°C.

The respective components used in Examples and Comparative Examples are as follows.

### (Fluoroelastomer)

FFKM1: tetrafluoroethylene/perfluoroalkyl vinyl ether copolymer (manufactured by Asahi Glass Company, Limited, tradename: AFLAS (registered trademark) Premium PM-1100, containing iodine atoms).
FFKM2: tetrafluoroethylene/perfluoroalkyl vinyl ether copolymer (manufactured by Asahi Glass Company, Limited, tradename: AFLAS (registered trademark) Premium PM-3000, containing iodine atoms).

### (Processing aid)

Processing aid 1: sodium stearate (manufactured by NOF CORPORATION)
Processing aid 2: calcium stearate (manufactured by KANTO CHEMICAL CO., INC.)
Processing aid 3: barium stearate (manufactured by Wako Pure Chemical Industries, Ltd.)
Processing aid 4: zinc stearate (manufactured by NOF CORPORATION) (Crosslinking agent)
2,5-dimethyl-2,5-di(t-butylperoxy)hexane (manufactured by NOF CORPORATION, tradename: PERHEXA25B)

### (Crosslinking aid)

Crosslinking aid 1: triallyl isocyanurate, diluted 60% with silica, tradename: TAIC WH-60 (manufactured by Nihon Kasei Co., Ltd.)
Crosslinking aid 2: the above-prepared fluorinated aromatic compound (X) (Filler)
Silica 1: manufactured by NIPPON AEROSIL CO., LTD., tradename: AEROSIL R8200
Carbon black 1: manufactured by Cancarb Limited, tradename: Thermax N990
Carbon black 2: manufactured by Coal Fillers Incorporated, tradename: Austin Black 325

### (Acid acceptor)

Zinc oxide two (manufactured by SAKAI CHEMICAL INDUSTRY CO., LTD.) EXAMPLES 1 TO 8 AND COMPARATIVE EXAMPLES 1 TO 7

In accordance with Table 1 or 2, the respective components were kneaded in an open roll for 10 minutes to prepare a fluoroelastomer composition. Then, the obtained fluoroelastomer composition was crosslinked under the following crosslinking condition.
Crosslinking condition "a": the fluoroelastomer composition was set in a mold heated at 150°C and maintained at 150°C for 20 minutes by a hot pressing machine to be crosslinked.
Crosslinking condition "b": the fluoroelastomer composition was set in a mold heated at 135°C and maintained at 135°C for 30 minutes by a hot pressing machine to be crosslinked.
Crosslinking condition "c": the fluoroelastomer composition was set in a mold heated at 230°C and maintained at 230°C for 10 minutes by a hot pressing machine to be crosslinked.

Then, the mold was taken out from the hot pressing machine, the crosslinked product (P-26 O ring) was removed from the mold and its surface was observed. The results are shown in Table 1 or 2.

Numerical values in Tables represent mass% of the respective components, unless otherwise specified, and "-" means that the component was not blended.

**[Table 1]**

| | | Example 1 | Example 2 | Example 3 | Example 4 | Example 5 | Example 6 | Example 7 | Example 8 |
|---|---|---|---|---|---|---|---|---|---|
| Fluoroelastomer | FFKM1 | 100 | 100 | - | - | - | - | - | - |
| | FFKM2 | - | - | 100 | 100 | 100 | 100 | 100 | 100 |
| Processing aid (fatty acid metal salt) | Processing aid 1 | - | - | - | - | - | - | - | - |
| | Processing aid 2 | 1 | 1 | 1 | - | 1 | 1 | 1 | 1 |
| | Processing aid 3 | - | - | - | - | - | - | - | - |
| | Processing aid 4 | - | - | - | 1 | - | - | - | - |
| Crosslinking agent | | 1 | 1 | 1 | 1 | 1 | 2 | 1 | 1 |
| Crosslinking aid | Crosslinking aid 1 | 5 | 5 | 3 | 3 | 3 | - | 0.5 | 3 |
| | Crosslinking aid 2 | - | - | - | - | - | 10 | 3 | 1 |
| Filler | Carbon black 1 | 10 | - | 15 | 15 | 12 | 5 | 5 | 15 |
| | Carbon black 2 | - | - | - | - | 3 | - | - | - |
| | Silica 1 | - | 10 | - | - | - | - | - | - |
| Acid acceptor | | - | - | - | - | - | 3 | 1 | - |
| Crosslinking condition | | a | a | a | a | a | a | a | a |
| Melting point of processing aid (°C) | | 147 | 147 | 147 | 140 | 147 | 147 | 147 | 147 |
| Crosslinking temperature (°C) | | 150 | 150 | 150 | 150 | 150 | 150 | 150 | 150 |
| Number of white foreign matters formed | | 0/9 | 0/9 | 0/9 | 0/9 | 0/9 | 0/9 | 0/9 | 0/9 |
| Evaluation | | A | A | A | A | A | A | A | A |

**[Table 2]**

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| Fluoroelastomer | FFKM1 | 100 | 100 | 100 | - | - | - | - |
| | FFKM2 | - | - | - | 100 | 100 | 100 | 100 |
| Processing aid (fatty acid metal salt) | Processing aid 1 | 1 | 1 | - | 1 | 1 | - | - |
| | Processing aid 2 | - | - | 1 | - | - | 1 | - |
| | Processing aid 3 | - | - | - | - | - | - | 1 |
| | Processing aid 4 | - | - | - | - | - | - | - |
| Crosslinking agent | | 1 | 1 | 1 | 1 | 1 | 1 | 1 |
| Crosslinking aid | Crosslinking aid 1 | 5 | 5 | 5 | 3 | 3 | 3 | 3 |
| | Crosslinking aid 2 | - | - | - | - | - | - | - |
| Filler | Carbon black 1 | 10 | 10 | 10 | 15 | 15 | 15 | 15 |
| | Carbon black 2 | - | - | - | - | - | - | - |
| | Silica 1 | - | - | - | - | - | - | - |
| Acid acceptor | | - | - | - | - | - | - | - |
| Crosslinking condition | | a | c | b | a | c | b | a |
| Melting point of processing aid (°C) | | 220 | 220 | 147 | 220 | 220 | 147 | 225 |
| Crosslinking temperature (°C) | | 150 | 230 | 135 | 150 | 230 | 135 | 150 |
| Number of white foreign matters formed | | 8/9 | Forming failed | 2/9 | 8/9 | Forming failed | 5/9 | 9/9 |
| Evaluation | | B | B | B | B | B | B | B |

As evident from the above results, in Examples 1 to 7 in which the fluoroelastomer composition was crosslinked at a crosslinking temperature higher than the melting point of the fatty acid metal salt as the processing aid, a crosslinked product without formation of white foreign matters was obtained.

As shown in Comparative Examples 2 and 5, in a case where a fatty acid metal salt having a melting point of at least 200°C was used, even if the fluoroelastomer composition was to be crosslinked at a crosslinking temperature higher than the melting point of the fatty acid metal salt, the composition was not formed by crosslinking. Further, as shown in Comparative Examples 3 and 6, even when a fatty acid metal salt having a melting point of less than 200°C was used, in a case where the fluoroelastomer composition was crosslinked at a crosslinking temperature of at most the melting point of the fatty acid metal salt, although the fluoroelastomer composition was formed by crosslinking, white foreign matters formed in some of the obtained crosslinked products.

In Comparative Examples 1, 4 and 7, the fluoroelastomer composition was crosslinked at a crosslinking temperature of 150°C which is considered as an appropriate crosslinking temperature, however, the melting point of the fatty acid metal salt was at least 200°C, which was at least the crosslinking temperature, and accordingly although the fluoroelastomer composition was formed by crosslinking, white foreign matters formed in most of the obtained crosslinked products.

From the above products, it is evident that by crosslinking the fluoroelastomer composition at a temperature higher than the melting point of the fatty acid metal salt as the processing aid, a crosslinked product which could be formed, in which formation of white foreign matters was suppressed, could be obtained. Further, it was found that the crosslinking temperature is preferably at most 200°C in order that forming by crosslinking is possible.

### INDUSTRIAL APPLICABILITY

According to the method for producing a crosslinked product of the present invention, in production of a crosslinked product containing a fluoroelastomer having no hydrogen atom bonded to a carbon atom, formation of white foreign matters can be suppressed. The fluoroelastomer composition of the present invention may be suitably used for the above method for producing a crosslinked product, by which formation of white foreign matters can be suppressed.

The entire disclosure of Japanese Patent Application No. 2015-205451 filed on October 19 , 2015 including specification, claims and summary is incorporated herein by reference in its entirety.

## Claims

1. A method for producing a crosslinked product, which comprises crosslinking a fluoroelastomer composition containing a fluoroelastomer having no hydrogen atom bonded to a carbon atom and a fatty acid metal salt having a melting point of less than 200°C, at a crosslinking temperature higher than the melting point of the fatty acid metal salt.

2. The method for producing a crosslinked product according to Claim 1, wherein the crosslinking temperature is at most 200°C.

3. The method for producing a crosslinked product according to Claim 1 or 2, wherein the crosslinking temperature is higher by at least 1°C than the melting point of the fatty acid metal salt.

4. The method for producing a crosslinked product according to any one of Claims 1 to 3, wherein the fatty acid metal salt is a compound represented by the following formula (3):
(RCOO⁻)ₙMⁿ⁺ (3)
wherein R is a C₁₀₋₃₀ organic group, n is an integer of 2 or 3, M is an alkaline earth metal, Zn, Cd, Co, Sn, Cu, Pb, Ni or Al.

5. The method for producing a crosslinked product according to any one of Claims 1 to 4, wherein the content of the fatty acid metal salt in the fluoroelastomer composition is from 0.1 to 10 parts by mass per 100 parts by mass of the fluoroelastomer.

6. The method for producing a crosslinked product according to any one of Claims 1 to 5, wherein the fluoroelastomer composition further contains an organic peroxide, and the content of the organic peroxide is from 0.1 to 5 parts by mass per 100 parts by mass of the fluoroelastomer.

7. The method for producing a crosslinked product according to any one of Claims 1 to 6, wherein the fluoroelastomer composition further contains a crosslinking aid, and the content of the crosslinking aid is from 0.1 to 15 parts by mass per 100 parts by mass of the fluoroelastomer.

8. The method for producing a crosslinked product according to Claim 7, wherein the crosslinking aid is triallyl isocyanurate.

9. The method for producing a crosslinked product according to Claim 7, wherein the crosslinking aid is a fluorinated aromatic compound having at least two vinyl groups or allyl groups bonded to the aromatic ring.

10. The method for producing a crosslinked product according to any one of Claims 1 to 9, wherein the fluoroelastomer is a copolymer containing structural units based on tetrafluoroethylene and structural units based on a perfluoro(alkyl vinyl ether).

11. A fluoroelastomer composition containing a fluoroelastomer having no hydrogen atom bonded to a carbon atom and a fatty acid metal salt having a melting point of less than 200°C.
